Europäisches Patentamt

(19) European Patent Office

Office européen des brevets

(11) Publication number: **0 194 820**
A2

(12) **EUROPEAN PATENT APPLICATION**

(21) Application number: 86301631.7

(22) Date of filing: 07.03.86

(51) Int. Cl.⁴: **G 02 B 19/00**
G 02 B 5/00, F 21 S 11/00
F 24 J 2/00, F 21 V 7/00
H 01 Q 15/00

(30) Priority: 08.03.85 ES 541060
08.03.85 ES 541061
08.03.85 ES 541063

(43) Date of publication of application:
17.09.86 Bulletin 86/38

(84) Designated Contracting States:
AT BE CH DE FR GB IT LI LU NL SE

(71) Applicant: Moreno Gil, Oscar
Avda. del Manzanares 86
Madrid(ES)

(72) Inventor: Moreno Gil, Oscar
Avda. del Manzanares 86
Madrid(ES)

(74) Representative: Mayes, Stuart David et al,
BOULT, WADE & TENNANT 27 Furnival Street
London, EC4A 1PQ(GB)

(54) Radiation collector and reflector.

(57) A radiation collector and reflector is described which is formed by reflective specular surfaces and by a central plate or axis, said central axis coinciding with the axis of the outer concavo-conic specular surface or with a conical axis, whose axis is in turn that of the outer concave specular surface. The specular surfaces are arranged together convergently at variable angles, permitting the radiant energy which strikes the concavity formed by the lateral planes to be concentrated on a plane situated between the exterior surfaces.

If the collector has a conical aspect, a tube is situated in the centre of the cone to receive all the radiation. Alternatively, the collector can have two cones or concentric-parallel conical figures in which the radiation striking the exterior conical concavity is reflected on the inner conical convexity and is projected in parallel, concentrated in the same direction as the incident light, parallel to the axes of the two conical figures.

FIG. I.

EP 0 194 820 A2

## RADIATION COLLECTOR AND REFLECTOR

This invention relates to a radiation collector and reflector, formed by reflective specular surfaces and by a central plate or axis.

To date there have been studies which explain (although not very thoroughly) the behaviour of light and the formation of images in conical mirrors; naturally, however, studies in relation to flat, spherical and parabolic mirrors have been extremely complete and exhaustive.

. In relation to energy concentration capacity, there are abundant studies as regarding concentration by means of flat mirrors, making many of them reflect energy upon one point.

But there is no study of the possibilities of light and energy concentration provided by flat mirrors some of which are situated to form concave figures, taking as a reference the axis of each concave figure. Nor has the behaviour of spherical mirrors in relation to their axis been studied or, naturally, the capacity of energy and light concentration of conical mirrors, in relation to their axis and connecting and coordinating various conical mirrors together.

The radiation collector and reflector of this invention is characterised by exterior flat or concave reflective specular surfaces, and an inner central plate or axis (elongated or conical). When said axis is elongated it coincides with the axis of the outer concave specular surface, and when it is conical the axis of this inner cone coincides with that of the outer concave-conical specular surface.

According to one aspect of this invention, if the collector is formed by reflective flat specular surfaces and these are arranged together convergently at varying angles of 90º or more,

said surfaces permit concentration of the radiant energy striking the concavity formed by the lateral planes on a plane situated between the exterior surfaces, which can be only two or can be three or more so that they form a pyramid, and the energy concentration centers upon the junction planes between the vertices of the collector.

If the collector is of conical shape and its specular surfaces are concavo-conic, the cone can have any angular opening (equal to, greater or lesser than 90º). Said cone can be complete and truncated. It has an axis which coincides with the central focal axis, formed by the central points of the different circumferences of the cone. All the radiant energy projected vertically upon the concavity of the cone necessarily crosses in said axis, for which reason a tube is situated in the center of the cone to receive on its surface all the radiation reflected in the concave surface. Said tube receives more radiation in the portion corresponding to the most open part of the cone (its base) and less radiation in the closed part of the cone (its vertex). An additional alternative of this invention is that the reflective surface of its collector and reflector object can have a spherical aspect, in which case the axis of the spherical cap (or reflective spherical surface) concentrates all the radiation reflected in the concave surface (hollow of the sphere) when the radiation is received vertically, that is, when the radiation is parallel to the normal of the spherical cap.

Another possible alternative of the collector of this invention is that it can have two cones with all their surfaces reflective and of different size, the smaller cone being inside the larger, the axis of the smaller being the same as that of the larger, said larger cone being always truncated, the smaller possibly in vertical or in inverted position and the angular openings of the vertices of the cones can be the same or not, so that both conical surfaces may or may not be situated completely parallel to one another.

According to another variant of the object of this invention, the collector and reflector can consist of two concentric-parallel conical figures in which the surfaces of both conical figures (larger and smaller) are completely parallel to one another, their vertices consequently having the same angular opening (more or less 90º), with the result that the radiation striking the exterior conical cavity is reflected upon the inner conical convexity and is projected in parallel, concentrated in the same direction as the incident light and parallel to the axes of both conical figures. An important variant of the cone last described, and which substantially improves it, is that the inner cone is smaller and the outer cone is higher, and to further the separation of the small central cone the radiation collector and reflector can have a movable member (central cone) which moves vertically the length of an axis (worm), permitting the operator a variable concentration of energy, adjustable at will, according to the specific need of each particular case, inasmuch as the small, central movable cone travels the length of the axis to vary the distance between its surface and that of the outer cone, and thus the greater the distance between the two surfaces, greater will be the degree of light or energy concentration achieved.

In all the mentioned cases it is also possible for the vertex of the inner cone to be oriented in a direction different from that of the vertex of the outer cone, so that the radiant energy may be projected in a direction different from that of the incident energy.

According to a final variant of the object of this invention it is possible for the concentric conical figures to not have parallel surfaces, so that when the inner cone has a smaller angular opening than the larger cone, the energy striking the concave surface of the outer cone is concentrated in successive parallel energy cones whose vertex is situated in the axis extending from the vertex of the inner reflective cone, and when the angular opening of the inner reflective cone is greater than that of the outer cone, the energy reflected in the smaller cone will be dispersed in parallel energy cones whose imaginary prolongations form vertices which cross in the axis.

The invention will now be explained in greater detail with the aid of the accompanying drawings.

- Figure 1 illustrates the radiation collector and reflector of this invention, formed by two planes of reflective surfaces placed at an angle with respect to each other.

- Figure 2 shows the behaviour of radiant energy when an intersecting plane is placed in the vertex between the two surfaces.

- Figure 3 illustrates the circumference formed by a section or profile of a cone.

- Figure 4 is a body plan of half a cone with a vertical central axis.

- Figure 5 is a section or profile of two cones, one placed parallel inside the other.

- Figure 6 is a lateral view of a profile of the two cones of Figure 5 and the path of the radiant energy.

- Figure 7 is a vertical view of two cones such as those of Figure 5, but here the outer truncated cone has been separated from the inner cone.

- Figure 8 is a lateral view of a profile of the two cones of Figure 7 and the path of the radiant energy.

- Figures 9 and 10 show a final variant of the arrangement of Figure 8 with greater complexity.

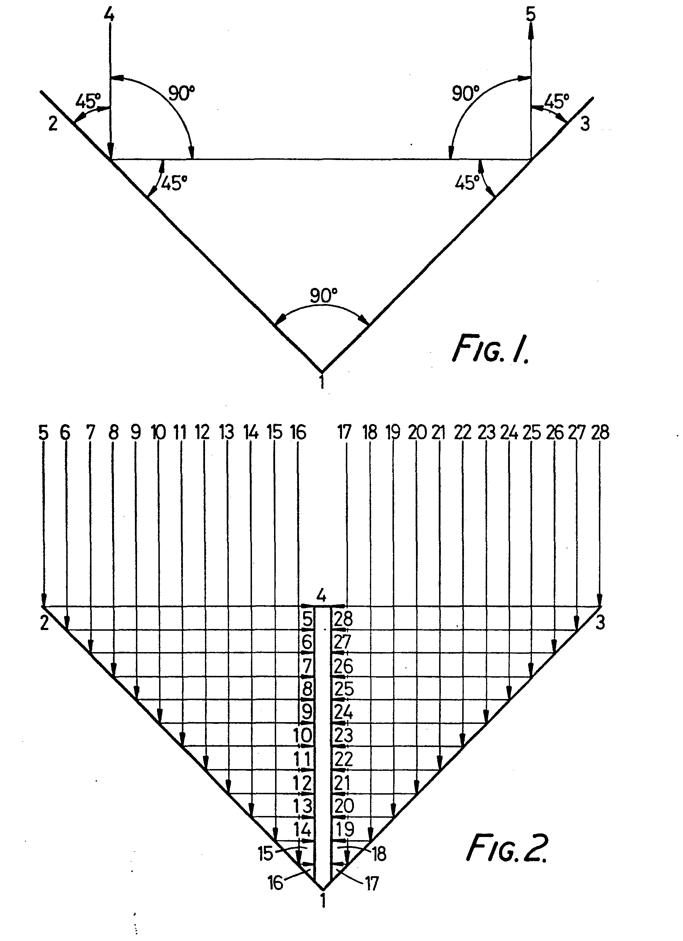

As may be observed in Figure 1, the radiation collector and reflector of the invention consists of a set of flat specular surfaces (1-2,1-3) which in their simplest structure comprise only two planes of reflective surfaces placed together at an angle. The two planes represented in this figure are viewed in profile and are joined at point (1). Even though these two planes may not be joined and the angle they form together may vary, in Figure 1 they are shown as joined and forming an angle of 90º. The reflective surfaces correspond to the inner portion of the angle formed by the planes.

As may also be observed in Figure 1, a beam (4) falling vertically upon the surface (2-1) reflects to form, with the struck surface, two angles of 45º. Said beam (4) then projects upon the plane (1-3), from which it is again reflected to once more form two angles of 45º with the struck surface, leaving as beam (5) projected vertically and parallel to the falling or incident beam but in the opposite direction. The internal angles of the figure formed by the path followed by beam (4) are of 90º.

Figure 2 shows the behaviour of radiant energy when an intersecting plane (1-4) is arranged in the vertex (1) between the two surfaces (1-2,1-3), that is, in the axis of the figure formed by 2-1-3 and cutting the angle into two other equal angles.

The numbers 5 to 16 designate incident beams which end in the left face of plane (1-4), and the numbers 17 to 28 designate incident beams which end in the right face of that plane. As may be deduced, the radiation received by axis (1-4) is 2-3 : 4-1 = 2.

As the larger figure forms a rectangular triangle with two equal sides, the axis divides the figure into two triangles also rectangular and with two equal sides, thus giving the ratio 2-3 : (1-4) = 2.

Therefore, axis 1-4 receives incident energy its entire length (which is half the length of the final angle opening), and thus the intensity of the energy received is double that of the incident energy. In this manner, according to Figure 2, axis 1-4 receives the full intensity of energy which vertically strikes the set of specular surfaces.

The amount of energy striking 1-4 is in direct proportion to the opening of angle 2-1-3, since the larger the opening the greater amount of incident energy which will end entirely on the surfaces of plane 1-4.

The angle opening itself is enlarged in two ways: a) increasing the size of the two specular planes or surfaces; or b) opening the angle formed by the sides. Naturally, in both cases the length of the axis must also be increased.

Assuming the angle opening of the surface were greater than 90°, the energy received would also be greater (the same as specular surface length), although the plane situated in the axis would also have to be longer.

If the angle opening were less than 90°, the energy received would be less (likewise the same as side length), but as the incident radiant energy tends to converge at the base formed by the intersection of the reflective planes, greater concentration is achieved. Thus with an opening of 22°, the concentration at the base is more than five times the energy received.

Naturally, the example represented in Figures 1 and 2 can be complicated by increasing the number of specular surfaces, for example, when surfaces arranged together in the form of a pyramid
are used. In this case, the radiation falling vertically upon the
base of the pyramid will be concentrated in two central planes
which cross perpendicularly, in the same manner as explained
previously for the case of only two surfaces in which there was
but a single central plane.

From all that has been explained, two important characteristics of the radiation collector and reflector of the invention are
evident: 1) it serves to concentrate energy upon the central plane
(or planes) of intersection of the angularly-placed specular surf-
aces, and 2) it serves as a light or energy lamp or projector in
that the central plane or planes can be substituted by sources of
light or of other energy.

An additional variant of the radiation collector and reflect-
or of the invention is that of a cone, assuming, to this effect,
that this cone is divided vertically into two equal parts, in the
form as shown in Figures 1 and 2. In this case, each of the two
halves into which the cone is divided has an external section which
is exactly a right-angled triangle, as represented in Figures 1 and
2. Now, the rays or beams of energy which fall vertically upon the
points which form the triangular section of each half of the cone
will behave just as they did when striking flat surfaces. This is
because any section resulting from cutting a cone vertically is a
triangle which consequently has straight sides. These sides are
the edges of the cone, and as such edges are straight lines, all
the points of the infinite circumferences constituting the cone
form straight lines. Naturally the cone can be split in the middle
by as many points as there are in the circumference of the base,
that is by an infinite number of points. These are the points which
join with the vertex by means of straight lines of infinite number,

- 8 -

just as infinite is the number of points of the circumferences which follow the surface of the cone from the circumference of the base to the vertex of the cone. It can be concluded from this that radiant energy behaves on conical surfaces just as it does on flat surfaces, and thus there is no "spherical aberration".

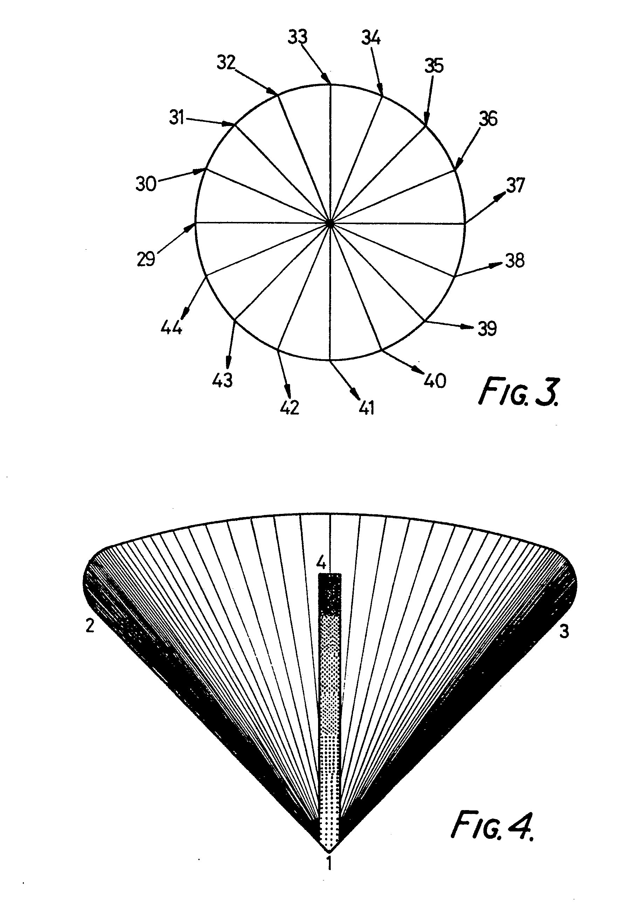

Figure 3 represents a circumference corresponding to the section or profile of a cone. In this case, instead of being cut vertically the cone is cut horizontally at any point. Thus the circumference corresponds to the border of any section cut horizontally, as has been said. Viewing a completely open circumference, that is, viewing a cone vertically from its base, any light beam falling vertically upon its edges will behave as shown in Figure 3. For example, after striking vertically, beam 29 will pass through the center of the circumference and will reflect vertically at point 37. This will also occur with any light beam. Eight paths (29 to 36) are plotted in Figure 3, all of which cross the center of the circumference, from which it can be deduced that radiant energy beams striking a circumference of the cone cross in the center. However, the cone has infinite circumferences which, parallel to one another and progressively decreasing in size, extend from the base to the vertex. The center of all these circumferences forms a succession of points which coincides exactly with the axis of the cone, or in other words the cone has a central axis formed by all the central points of the infinite circumferences which comprise it. It can be concluded from this that the radiant energy beams falling vertically upon the concave part of a cone cross in the axis, or what is the same thing, the radiant energy beams proceeding vertically from the axis to strike the concave surface of the cone will be projected towards the exterior of the cone in bundles parallel to its central axis.

Figure 4 shows half of a vertically-divided cone in which, in the form of a tube, a vertical central axis has been placed.

The radiant energy vertically striking the concavity of the cone will follow a path which will be interrupted by the tube, with the result that each point of the axis captures the energy reflected by all the points of the circumference of which that point is the center. It can be concluded from this that the broader the circumference, more energy will be concentrated in the central point. Hence the concentration will be greater in that part of the axis most distant from the vertex of the cone, as represented in Figure 4 in which the shading of the axis (1-4) has been darkened in proportion to the amount of energy it receives.

Assuming that the axis is something material and not a theoretical succession of points, and that $2\pi R$ is the length of the circumference of the cone and $2\pi r$ the length of the circumference of the axis, the concentration will be calculated by the following equation:

$$X = \frac{2\pi R}{2\pi r}$$

If the radius of the circumference is one meter and the radius of the circumference of the axis is one centimeter, then the concentration will have a value of 100; that is, the concentration will be 100 times in that part of the axis corresponding to the central point of the circumference of the cone taken as an example.

In the opposite supposition, namely in which the axis is the central emitter of energy, exactly the opposite of the mentioned rule applies; that is, the energy emitted by each point of the axis will be perceived by all the points of the circumference of which that point is the center. Therefore, if the axis is the central emitter of energy, the conical surface will perceive the energy in

- 10 -

inverse proportion to its opening, that is, the upper portion (base of the cone) will perceive less energy for each point of the circumference than the lower portion (vertex of the cone).

Assuming the case of a spherical concavity, this indeed has the known "spherical aberration", with the result that the radiant energy reflections produced in that spherical concavity are anarchical and uncontrollable. However, the bundles of radiant energy which fall vertically upon the concave portion of a spherical specular concavity, even though following different paths, all cross with the normal. In effect, even though before reaching the normal - after reflection - and after crossing it the beams follow anarchical paths (forming the figure known in optics as "caustic of the concave mirror"), all the beams cross with the normal before or after.

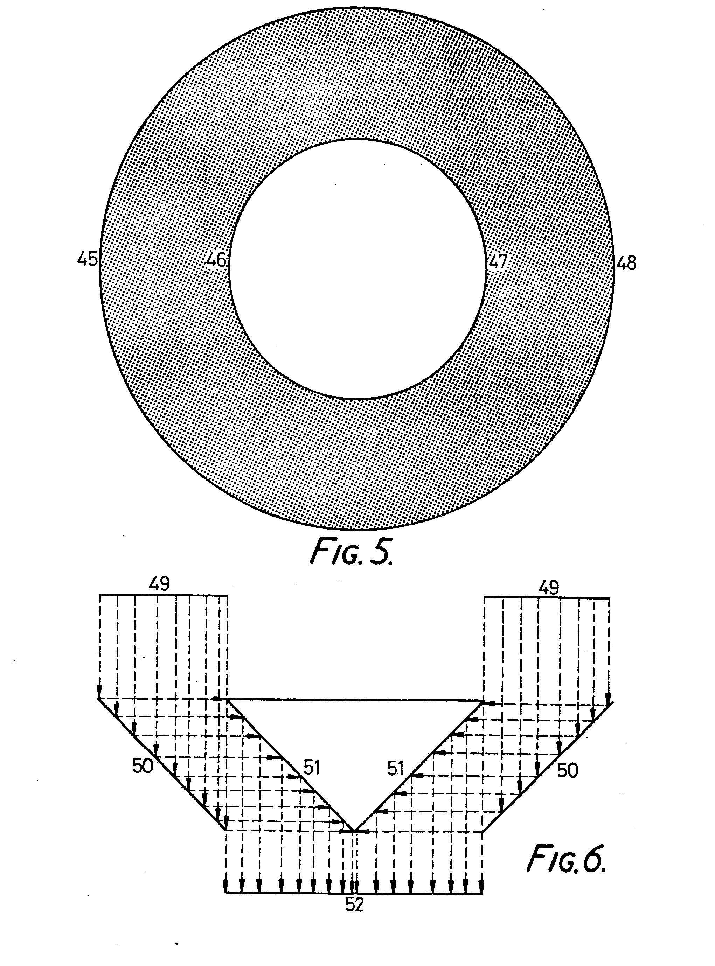

Figure 5 represents, in vertical perspective, two conical phases of which that of the smallest cone corresponds to the diameter extending from 46 to 47, and that of the larger corresponds to the diameter 45 to 48. The larger cone is hollow, is open at the base and is represented by dotted shading. The smaller cone is represented in black and therefore can appear closed at its base, although it may not be. As may be observed in the figure the cones are centered, the bases thus having the same geometric center.

Figure 6 is a side view of a section or profile of the two cones represented in Figure 5, the edges of which are parallel.

The smaller interior cone is complete, while the larger outer cone is truncated. The position of both cones is inverted, with the vertex downward, and their lengths are the same. In this example, the selected angle of conical opening is 90º. That is, both cones would form two right-angled isosceles triangles by projection. Although an angle opening of 90º has been taken as an example, that

0194820

- 11 -

opening can actually be larger or smaller.

Assuming that an energy beam falls vertically upon the specular surface 50, the path the beam will follow will be the projection upon the surface of the smaller cone, to be reflected from there in a direction opposite that of initial incidence. The behaviour of the incident beam is that of incidences in flat mirrors, studied earlier in this specification.

As may be seen in Figure 6, the radiant energy follows the path 49-50-51-52. It enters the opening presented between the bases of the cones (Figure 5) and finally leaves through space 46-47 of said Figure 5, corresponding to 52 in Figure 6. The radiant energy enters in circular manner through the spherical cap, and leaves compacted in a single circle. The amount of incident light is equal to $R^2 - r^2$, R being the radius of the circle of the larger cone (truncated) and r the radius of the smaller cone.

Assuming R = 2 and r = 1, the concentration will be 4-1, or three times.

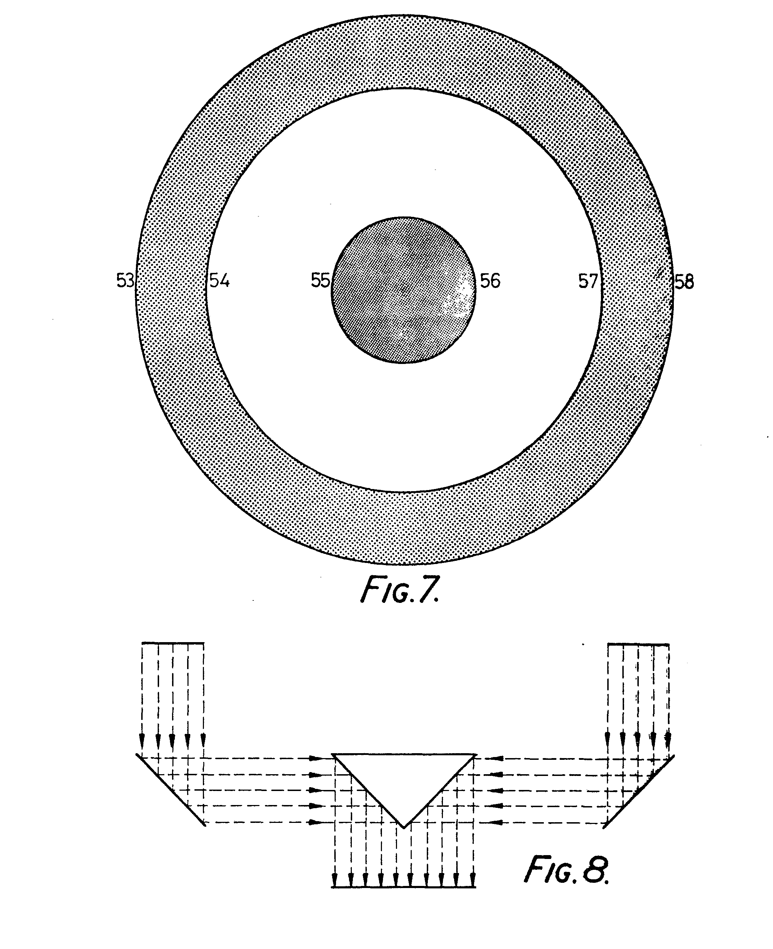

The concentration will be greater as the radius of the outer cone increases. This can be seen by the representations of Figures 7 and 8. Figure 7 is a vertical perspective of two concentric conical phases, more separated from one another than in Figure 5, and Figure 8 illustrates the horizontal perspective and the path of the radiant energy.

If we assume that in Figure 7 the radius of the inner circle continues to be 1 and band 53-54 is also 1, and that the outer circle has receded from the center ten times its width, the outer area is accordingly the difference between the area of the circle demarcated by 53-58 and that of the circle demarcated by 54-57. As the area of circle 55-56 is 3.14, the concentration obtained by 53-58 is twenty-three times.

It can thus be deduced that the concentration increases two points for each unit of recession or separation from the center, starting from the initial concentric position of the bases of the cones.

The functionality of the radiation collector and reflector can be amplified by increasing its complexity.

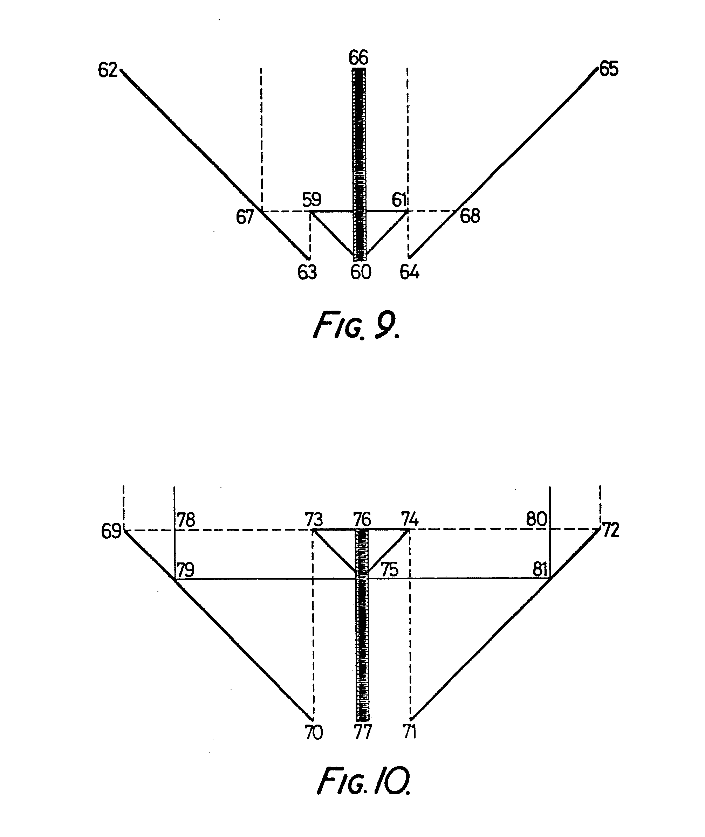

Figure 9 is an example. Here the format of the inner cone (59-60-61) is maintained, but the size of the outer cone (62-63, 64-65) has changed. In addition a worm 60-66 has been added which, placed in the vertical central axis of the figure traverses the inner cone from the base to the vertex. Thus this worm extends from the base of the outer cone to the vertex of the inner cone, the latter turning upon the worm as a nut and moving upwards and downwards at the will of the operator.

When the inner cone is situated in the lower portion (the narrowest part of the outer truncated cone) the radiant concentration obtained is minimal. As the inner cone moves around the axis away from the initial position a greater degree of radiant concentration is obtained, reaching the maximum when the inner cone is at the uppermost limit (Figure 10).

The energy shown in Figure 9 is that falling in the circle extending between points 67-68 (less that in the circle demarcated by points 59-61; however, that energy must not be subtracted when 59-61 corresponds to an object transparent with respect to the incident energy).

The energy shown in Figure 10 is that falling in the circle extending between 69-72 (outer circumference) and 78-80 (inner circumference), with addition of that falling in circle 73-74 if the material of which it is formed were transparent to the incident energy.

- 13 -

From all that has been explained, the following - among possible others - are practical applications of the radiation collector and reflector:

a) The conical (and also spherical) surface concentrates radiant energy in its central axis, with the result that energy collectors can be made whose axes, in the form of a tube, meet the described characteristics.

The energy collected by the central axis can be of very varied type. Consider, for example, radio and television waves which are presently collected by means of parabolic antennae.

But also and principally we must consider solar energy, which concentrated by such a simple procedure (both in cone and spherical form) permits infinite practical applications, from the direct (and simple) obtainment of radiated heat to, surely, the desalting of sea water. This function could be fulfilled very easily by a simple floating cone, which partially submerged in the sea would evaporate the water ascending the communicating vessel formed by the central axis, since the warm water would flow to the upper part of the axis and the higher it rose the more it would heat (the energy concentration progressively ascending), until it were evaporated.

b) Conical concavity is simultaneously a good reflector. It would be simple to build beacons of all types. Present beacons are based on parabolas. But the parabola is a sophisticated figure and therefore difficult to manufacture. The cone, on the other hand, is an elemental figure which can be made without problems. The principal difficulty of a cone converted into a beacon lies in the different light concentration received by the conical surface if the axis emits the same amount of light its entire length. In such case the projected light beam would have greater concentration in

0194820

- 14 -

the center, and less toward the exterior. This problem is circumvented by progressively increasing the luminosity of the axis the length of its path, and in proportion to the cone opening.

In addition, by varying the inclination of the axis (or installing various axes of different inclination, or in other words decentering them) the light beam can have different inclination and a different path or sweep according to the desired purpose (such as, for example, the different intensities and beam lengths required in motor vehicles).

c) These applications are also clearly readaptable to cases of flat mirrors arranged to form a concavity, as has already been explained.

d) The same practical applications may be employed with concentric cones, although in such case the energy may be routed, increased and transferred at will.

The described collector is practical, for it is useful in various ways:

a) The concentrated energy may be used directly, by itself.

For example, take solar energy, whose concentration in the case of concentric cones would range from triple (although naturally less, if desired) to the infinite (the infinite in theory). Actually it would not be costly to achieve concentrations of 10 to 50 times, with obtained operating temperatures far exceeding 100ºC and probably above 1,000ºC.

b) But the recollectable energy is not only solar, and can be merely luminous or any other radiant energy.

If it is simply luminous, in the case of concentric cones images can be obtained of greater luminosity than those possible by mere ocular observation. Naturally, the luminosity of the object submitted to observation will increase according to the explained indexes of concentration.

c) If the concentrated energy is different from the above (involving radio waves, for example), the collector explained here will collect it according to a theory different from that of parabolic antennae, but with the same effectiveness.

d) In addition, it is much easier technically (and therefore less expensive) to build a collector of flat mirrors, but it is also easier to construct a perfect cone than a perfect parabola. Better said, an absolutely perfect parabola is technically impossible, above all in optics where lens-assemblies of great size are employed.

In addition parabolas, above all in optics, always produce some spherical aberration. Hence only objects situated in the center of the image can be well observed. But the cone, comprised of straight lines (although in rotation), is easy to construct, and without the defects common to curvature which does not exist in the edges of the cone. But in addition the circumference is likewise easy to construct without defects (and certainly is much easier to make than the very sophisticated figure of the parabola).

e) Concentrated radiation according to what has been explained is of course employable in accordance with the indications in the preceding paragraphs (from letter a) to letter d)). In all these cases the practical utility results directly from exclusive use of the patented instrument.

But it is also possible to combine this collector (in its double-cone configuration) with other already existent instruments, thus making it possible to improve the normal effectiveness of the latter and the performance of the unit formed by the collector of this invention and the preexisting instrument. In such case the object of this invention acts as an effective complement to the other instrument.

Such would be the case, for example, in the terminal of an optical instrument. The ordinary light incidence therein would be multiplied by a figure not less than three (and of theoretical amplification to infinity), by coupling to its mouth a double-cone conical instrument such as has been herein described.

f) The coupling described in the preceding paragraph may be realised with any previously installed receiver of radiant energy.

It is even possible to make distant transmission of the energy received and collected by the collector of this invention (in its double-cone aspect), since in the supposition as so far described the reflected radiation, although concentrated, is maintained parallel. Its parallel path is continued to the infinite, and thus it can be reflected by flat surfaces whenever necessary.

Accordingly, it is possible to imagine a telescope which receives from a distance the radiation picked up by a conical collector.

The concentration of radiant energy (in its double-cone configuration) has as many variations as there are possible combinations of conical figures.

The supposition so far explained has been based on the hypothesis that both cones have a right-angled vertex and their respective surfaces lie parallel. But it is possible for the conical figures to have a different opening and, in each case, for the inner cone to be placed in inverted position with respect to the outer cone.

The following are the possible combinations:

a) Right-angled opening in both cones.

b) The same acute-angled opening in both cones.

c) The same obtuse-angled opening in both cones.

d) Reciprocally different angular opening in each cone.

In every case the pairs of cones can be concentrically situated and parallel, or can be in reciprocally inverse position:

a) If the opening of both cones is right-angled, it can occur:

$a^1$) that both cones, in addition to being concentric, are parallel.

This hypothesis corresponds exactly with what has been explained here for the collector in its double-cone aspect.

$a^2$) that both cones are in inverted position, and their vertical central axes are parallel.

The result is that the radiation striking the larger conical figure is reflected upon the smaller cone, from which it reflects concentrated in the space corresponding to the central circle formed by the vertical projection of the smaller cone.

In the inverse, in turn, the radiation striking the smaller cone is projected, in direction opposite the incident direction, into the space corresponding to the outer circular figure formed by the vertical projection of the larger cone.

b) The behaviour of the reflected radiation, when the opening of both cones is of the same acute angle, resembles that of the previous case.

$b^1$) If both cones are placed parallel, the incident radiation fulfils the same basic principles as in the case heretofore studied of cones of right-angled vertices.

Both in cones of right-angled vertices and those of acute angles, the following same constants are met:

- Radiation striking vertically with reference to the central axis maintains its vertical path following the second reflection.

- The reflection angles are always constant. The four external reflection angles are equal, as are the two internal re-

0194820

- 18 -

flection angles with respect to one another.

- Definitely, there is behaviour such as that corresponding to flat mirrors.

$b^2$) When both cones are inverted they also act as indicated in $a^2$ above.

c) When the opening of both cones is an obtuse angle, the same rules apply:

$c^1$) In the event both conical figures are placed parallel and concentric, the result obtained is the same as that explained in $b^1$)

$c^2$) The same constants are likewise fulfilled when the cones are inverted.

d) When the angular opening of the cones is respectively different, dissonant effects are obtained.

Concentric cones with the same opening maintain the parallelism of the incident radiation. There is parallel harmony between the incident and projecting radiation.

But concentric cones of different openings break with the parallelism of the incident radiation, so that the projecting radiation is either concentrated or dissociated.

$d^1$) It is concentrated when the angular opening of the smaller inner cone is greater than that of the larger outer cone.

The radiation acts in the same way in the case of inverted cones. However, the concentration changes direction, following the angle of the inner cone.

$d^2$) Incident parallel radiation is dissociated upon reflecting when the inner cone has a greater angle than the outer cone.

In both cases of concentration and dissociation of radiation, this could again be projected in parallel (if the radiation were luminous) by the coupling of a conical lens in the exit opening of the cited conical pair. If the light is concentrated (internal cone of greater angular opening) it will be necessary to couple
(centered in the focal axis) a conico-divergent lens. In the
inverse case the lens must also be inverse, namely conico-con-
vergent.

What is claimed:

1. Radiation collector and reflector, characterised in that it comprises, on its exterior, flat or concave reflective specular surfaces, and in its interior, an elongated central plate or axis which coincides with the axis of the outer concavo-conic specular surface or of a conical axis whose axis is in turn that of the outer concave specular surface.

2. Radiation collector and reflector according to claim 1, characterised in that the reflective flat specular surfaces are placed together convergently at varying angles, of 90º or more, so that the radiant energy striking the concavity formed by the lateral planes concentrates on a plane situated between two or more exterior surfaces, with the result that when these are more than two a pyramid is formed and the energy concentration centers on the planes joining the vertices of the collector.

3. Radiation collector and reflector in the form of a cone according to claim 1, characterised in that it is of concavo-conic structure and the cone may have any angular opening, namely, equal to, greater or lesser than 90º, and can be complete or truncated, and in that it has an axis which coincides with the central focal axis formed by the central points of the different circumferences of the cone, in which axis crosses all the radiant energy projected vertically upon the concavity of the cone, in the center of which an axis or tube receives upon its surface all the radiation reflected in the concave surface, said axis or tube receiving a greater amount of radiation in the base of the cone and a smaller amount of radiation in the vertex of the cone.

4. Radiation collector and reflector according to claim 1, characterised in that the reflective surface has a spherical aspect, and the axis of the spherical cap or reflective spherical surface concentrates all the radiation reflected in the concave surface, concentrating all the radiation received vertically in the axis corresponding to the normal of the spherical cap.

5. Radiation collector and reflector in the form of two cones according to claim 1, all the surfaces of said cones being radiant and of different size, the smaller cone being introduced in the larger, the latter being always truncated, and the axis of the smaller cone coinciding with the axis of the larger, whereby both conical surfaces may be oriented in the same direction or in contrary direction and may have the same or a different angular opening.

6. Radiation collector and reflector according to claim 5, consisting of two concentric-parallel conical figures wherein the surfaces of the two conical figures (larger and smaller) are oriented in the same direction and are totally parallel, their vertices consequently having the same angular opening (equal to, greater or lesser than 90º), and in that the radiation striking the exterior conical concavity reflects upon the inner conical convexity and projects concentrated, in parallel, in the same direction as the incident radiation, parallel to the axes of the two conical figures.

7. Radiation collector and reflector according to claims 5 and 6, characterised in that the inner cone is smaller and the outer cone is higher, and in that it can have a movable member (central cone) which moves vertically the length of an axis, whereby a variable and selective energy concentration can be obtained, adjustable at will.

8. Radiation collector and reflector according to claim 5, characterised in that the vertex of the inner cone, which has the same angular opening as the outer cone, is oriented in a direction different from that of the vertex of the outer cone, and thus the radiant energy is projected in a direction different from that of the incident energy.

9. Radiation collector and reflector according to claim 5, characterised in that the concentric conical figures have different angular openings and therefore never have parallel surfaces, so that when the inner cone has a smaller angular opening than the outer cone, the energy striking the concave surface of the outer cone is concentrated in successive parallel energy cones whose vertices are situated in the axis extending from the vertex of the inner reflective cone, and when the angular opening of the inner reflective cone is greater than that of the outer cone, the energy reflected in the smaller cone disperses in parallel energy cones whose imaginary prolongations form vertices which cross in the axis.

1/5

FIG. 1.

FIG. 2.

FIG. 3.

FIG. 4.

45  46  47  48

*FIG. 5.*

49  49

50  51  51  50

52

*FIG. 6.*

0194820

53    54    55    56    57    58

FIG.7.

FIG.8.

5/5

0194820

Fig. 9.

Fig. 10.